Europäisches Patentamt

European Patent Office

Office européen des brevets

(11) Veröffentlichungsnummer: **0 058 285**
**A1**

(12) ## EUROPÄISCHE PATENTANMELDUNG

(21) Anmeldenummer: **81730120.3**

(22) Anmeldetag: **25.11.81**

(51) Int. Cl.³: **B 65 H 7/14**

(30) Priorität: **13.02.81 DE 3106144**

(43) Veröffentlichungstag der Anmeldung:
**25.08.82 Patentblatt 82/34**

(84) Benannte Vertragsstaaten:
**FR GB IT NL SE**

(71) Anmelder: **Mannesmann AG**
**Mannesmannufer 2**
**D-4000 Düsseldorf 1(DE)**

(72) Erfinder: **Babsch, Alfred**
**St.-Jakob-Strasse 14**
**D-7900 Ulm-Söflingen(DE)**

(74) Vertreter: **Presting, Hans-Joachim et al,**
**Herbertstrasse 22**
**D-1000 Berlin 33(DE)**

(54) **Kontrollvorrichtung für den Aufzeichnungsträger in Druckern.**

(57) Bei dieser Kontrollvorrichtung ist auf einer Seite des Transportkanals (1) ein Lichtsender (4) und ein Lichtempfänger (5) und auf der gegenüberliegenden Seite ein Reflektor angeordnet. Derartige Reflexlichtschranken dienen in Druckern zur Ermittlung von Betriebszuständen des Druckers in Abhängigkeit des Aufzeichnungsträgers, z.B. für die Ankunftszeit des Aufzeichnungsträgers, dessen Durchlauf oder örtliche Positionen innerhalb des Transportkanals (1).

Um Schwierigkeiten bei der Justierung des Sensors (3), der aus dem Lichtsender (4) und dem Lichtempfänger (5) besteht, zu vermeiden, d.h. um bei reflektierenden oder weitestgehend weißen Aufzeichnungsträgern (2) Reflexe und damit Fehlmeldungen in dem Lichtempfänger (5) zu vermeiden, ist vorgesehen, daß zwei mit dem gleichen Abstand von Lichtsender (4) und Lichtempfänger (5) angeordnete, sich auf der Reflektorseite (7a) gegenüberliegende Reflektoren (7b, 7c) vorgesehen sind und daß dem Lichtempfänger (5) und/oder dem Lichtsender (4) eine Blende (9a bzw. 9b) im Strahlengang (8) vor- bzw. nachgeschaltet ist.

Fig.2

EP 0 058 285 A1

Kontrollvorrichtung für den Aufzeichnungsträger in
Druckern

Die Erfindung betrifft eine Kontrollvorrichtung für den
Aufzeichnungsträger in Druckern mit auf einer Seite des
Transportkanals angeordnetem Lichtsender und Lichtempfänger und auf der gegenüberliegenden Seite befestigtem Reflektor.

Derartige sogenannte Reflexlichtschranken dienen in
Druckern zur Ermittlung von Betriebszuständen des
Druckers in Abhängigkeit des Aufzeichnungsträgers.
Als Betriebszustände werden die Ankunftszeit des
Aufzeichnungsträgers, dessen Durchlauf oder örtliche
Positionen innerhalb der Transportbahn bezeichnet. Für
den Fall, daß der Aufzeichnungsträger aus absolut
lichtundurchlässigen Sparbüchern, Flugscheinen oder
dergleichen besteht oder aus metallischen Werkstoffen,
dienen deren Vorder- oder Hinterkante zur Ermittlung
eines Betriebszustandes.

Aufgrund des ermittelten Betriebszustandes arbeitet die
elektronische Steuerung des Druckers, so daß der Antrieb
für den Aufzeichnungsträger, die Synchronisation für die
Kante des Aufzeichnungsträgers gegenüber dem Zeilenraster
eines Matrixdruckers oder die Bewegung des Druckkopfes
des Matrixdruckers gesteuert angetrieben werden können.

Bei der eingangs bezeichneten Vorrichtung mit auf einer Seite des Transportkanals angeordnetem Lichtsender und Lichtempfänger ist der auf der gegenüberliegenden Seite befestigte Reflektor mit seiner Spiegelfläche senkrecht zur Mittelachse des Sensors (Lichtsender und Lichtempfänger) angeordnet. Diese Anordnung erweist sich jedoch als nachteilig, weil reflektierende oder weitestgehend weiße Aufzeichnungsträger Reflexe erzeugen und weil diese Reflexe intensiver wirken können als die regelrechten Lichtstrahlen und in dem Lichtempfänger zu Fehlmeldungen führen. Weiterhin sind diese bekannten Sensoren nachteilig, weil der Lichtempfänger im Hinblick auf eine sehr unvollkommene Justierung oft gerade noch die Reflexe aufnimmt, jedoch die regulären Lichtstrahlen nicht mehr registriert.

Der Erfindung liegt die Aufgabe zugrunde, bei der gattungsgemäßen Vorrichtung, bestehend aus einem Sensor (Lichtsender und Lichtempfänger) und einem gegenüberliegenden Reflektor, den Reflektor ohne große Einstellarbeiten einzubauen und trotzdem Fehlleitungen der Lichtstrahlen zu vermeiden, und ferner die Aufgabe, Wirkungen aus Reflexen zu vermeiden.

Die gestellte Aufgabe wird erfindungsgemäß dadurch gelöst, daß zwei mit dem gleichen Abstand von Lichtsender und Lichtempfänger angeordnete, sich auf der Reflektorseite gegenüberliegende Reflektoren vorgesehen sind und daß dem Lichtempfänger und/oder dem Lichtsender eine Blende im Strahlengang vor- bzw. nachgeschaltet ist. Eine solche Gestaltung erfordert eine nur geringe Einstellarbeit am Reflektor. Die Blenden sind außerdem vorteilhaft, um die unerwünschten Reflexe vom Lichtempfänger fernzuhalten. Diese Gestaltung gewährleistet andererseits aber auch, den Sensor, bestehend aus Lichtsender und Lichtempfänger, als eine Baueinheit beizubehalten, die ebenfalls einfach gegenüber dem Reflektor zu justieren ist. Von besonderem Vorteil ist, daß stets ein paralleler Strahlengang zwischen Lichtsender und Lichtempfänger erreicht werden kann.

Aus diesem Grund ist es auch vorteilhaft, daß die Strahlengänge von Lichtsender und Lichtempfänger jeweils senkrecht zur Bewegungsrichtung des Aufzeichnungsträgers verlaufend gewählt sind.

Im Fall einer besonders günstigen Ausführungsform ist vorgesehen, daß die beiden Reflektoren aus einem sogenannten Tripel-Reflektor bestehen. Der Tripel-Reflektor kann als Baueinheit eingesetzt werden.

Vorteilhaft ist außerdem, daß Lichtsender bzw. Lichtempfänger aus Infrarot-Sender bzw. Infrarot-Empfänger gebildet sind.

Ein Ausführungsbeispiel der Erfindung ist in der Zeichnung dargestellt und wird im folgenden näher beschrieben. Es zeigen

Fig. 1 einen Querschnitt durch die erfindungsgemäße Kontrollvorrichtung, ohne daß sich ein Aufzeichnungsträger im Drucker befindet, und

Fig. 2 denselben Querschnitt wie Fig. 1, mit einem im Drucker befindlichen Aufzeichnungsträger.

Die erfindungsgemäße Kontrollvorrichtung ist an jeder Stelle des Transportkanals 1 für den Aufzeichnungsträger 2 eines Druckers, z.B. eines Matrixdruckers, angeordnet, an der der Durchlauf, die Geschwindigkeit oder die Anwesenheit des Aufzeichnungsträgers, seiner Vor-

- 4 -

derkante oder seiner Hinterkante gemessen werden sollen. Es können auch Paare dieser Kontrollvorrichtung angeordnet werden. Auf der einen, wie gezeichnet, linken Seite des Transportkanals 1 befindet sich der Sensor 3, der aus dem Lichtsender 4 und dem Lichtempfänger 5 gebildet wird, die beide auf der Grundplatte 6 befestigt sind.

Der Sensor 3 bildet eine opto-elektronische Einheit, mittels derer der Antrieb für den Aufzeichnungsträger, die Synchronisation für die Vorder- oder Hinterkante des Aufzeichnungsträgers mit dem Zeilenraster eines Matrixdruckers und/oder die Bewegung des Druckkopfes gesteuert werden.

Auf der anderen, wie gezeichnet, rechten Seite 7a befindet sich der Reflektor 7, der aus den beiden Reflektoren 7b und 7c gebildet ist. Die vom Lichtsender 4 ausgehenden Lichtstrahlen verlaufen im Strahlengang 8 zum Lichtempfänger 5.

Der Strahlengang 8 wird dabei durch jeweils eine Blende 9a nach dem Lichtsender 4 bzw. eine Blende 9b vor dem Lichtempfänger 5 begrenzt. Die Blende 9a ist im Gehäuseteil 10 des Druckers durch eine kurze Bohrung 11a gebildet, an die sich eine erweiterte Bohrung 11b für die Lichtquelle 12 anschließt. Die Blende 9b für den Lichtempfänger 5 besteht aus der den Gehäuseteil 10 durchstoßenden Bohrung 13. Der Strahlengang 8 kann durch die Abmessungen bzw. durch die Form dieser Bohrungen 11 b und 13 fokussiert werden.

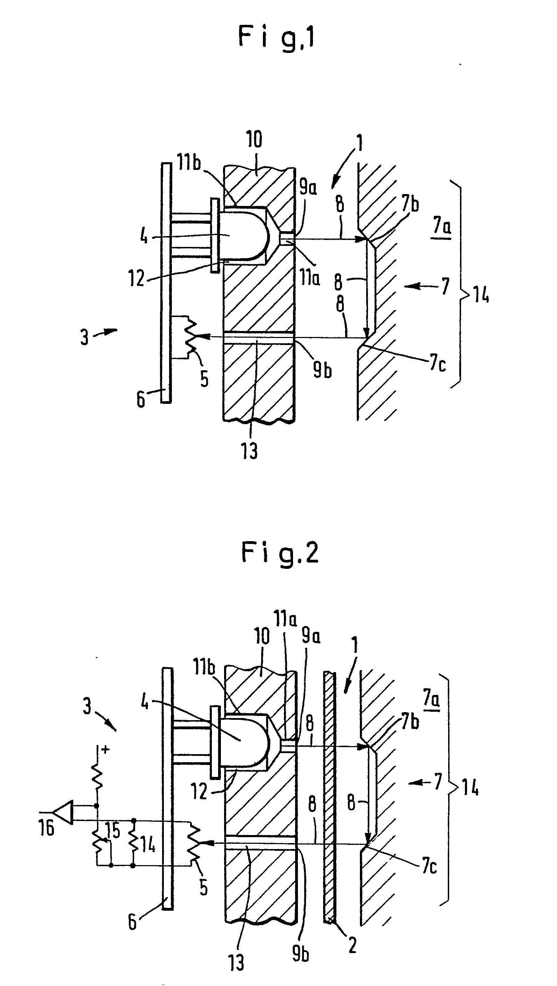

Bei ungehemmtem Strahlengang 8 (Fig. 1) fällt das volle Licht der Lichtquelle 12 auf den Reflektor 7b, wird abgelenkt auf den Reflektor 7c und wird auf den Lichtempfänger 5 geworfen.

Bei einem teildurchlässigen Aufzeichnungsträger 2 (wie in Fig. 2 vorausgesetzt) wird eine entsprechend geringere Lichtmenge auf den Lichtempfänger 5 geleitet.

Die Reflektoren 7b und 7c bilden zusammen im Ausführungsbeispiel einen einzigen Tripel-Reflektor 14, der als selbständiges Bauteil in die Wandung des Transportkanals 1 eingesetzt ist.

Zweckmäßigerweise bestehen der Lichtsender 4 und der Lichtempfänger 5 aus einem Infrarot-Sender bzw. einem Infrarot-Empfänger. Infrarotstrahlen durchdringen (gedämpft) nahezu alle gebräuchlichen Aufzeichnungsträgerwerkstoffe.

Der Strahlengang 8 in den beiden Reflektoren 7b und 7c ist entweder durch Justieren der Grundplatte 6 und/oder des Tripel-Reflektors 14 auf Parallelität einstellbar. Die Vorrichtung arbeitet gemäß folgender Wirkungsweise:

Aufgrund des Strahlenganges 8 wird festgestellt, ob ein Aufzeichnungsträger 2, z.B. ein an den Randbereichen perforierter Papierstreifen, vorhanden ist oder zu welchem Zeitpunkt die Vorderkante des Papierstreifens in den Drucker einläuft. Mit dem Signal der Kontrollvorrichtung, das verstärkt wird, erfolgt in der Elektronik des Matrixdruckers die Synchronisation der Vorderkante des Papierstreifens mit dem Zeilenraster. Ein solcher Zeilenraster kann beispielsweise in einer Zeilenteilung von 1/6" bestehen. Diese Synchronisation ist z.B. bei sogenannten Sparbuchdruckern von erheblicher Bedeutung. In solchen Druckern werden Vorder- oder Hinterkante synchronisiert. Die Steuerung des Druckers leitet aus der Synchronisation Bewegungen des Druckkopfes bzw. des Antriebs für den Aufzeichnungsträger 2 ab.

In der dargestellten Ausführungsform besteht der Lichtempfänger 5 aus einer Photodiode. Tritt in den Lichtempfänger 5 mehr Licht ein, wird die Photodiode niederohmig, weil ein höherer Strom fließt. Dieser Strom wird durch den Belastungswiderstand 14 begrenzt und kann durch den Einstellwiderstand 15 abgestimmt werden. In dem Spannungskomparator 16 werden jeweils zwei Zustände erzeugt. Für den Fall, daß die Eingangsspannung am Einstellwiderstand 15 unterhalb "low" liegt (logisch ergibt das den Zustand "Null"), stellt dieses Potential den einen Zustand dar. Für den anderen Fall, daß die Eingangsspannung am Einstellwiderstand 15 über "low" liegt (logisch ergibt das den Zustand "eins"), stellt dieses höhere Potential den anderen Zustand dar, so daß über die Zustände am Spannungskomparator 16 die gewünschten Signale für die elektronische Steuerung des Druckers, den Antrieb für den Aufzeichnungsträger 2, die Synchronisation für die Kante des Aufzeichnungsträgers gegenüber dem Zeilenraster des Matrixdruckers und die Bewegung des Druckkopfes bzw. Schlittens eines Matrixdruckers abgeleitet werden können.

Kontrollvorrichtung für den Aufzeichnungsträger in Druckern

Patentansprüche:

1. Kontrollvorrichtung für den Aufzeichnungsträger in Druckern mit auf einer Seite des Transportkanals angeordnetem Lichtsender und Lichtempfänger und auf der gegenüberliegenden Seite befestigtem Reflektor, dadurch gekennzeichnet, daß zwei mit dem gleichen Abstand von Lichtsender (4) und Lichtempfänger (5) angeordnete, sich auf der Reflektorseite (7a) gegenüberliegende Reflektoren (7b, 7c) vorgesehen sind und daß dem Lichtempfänger (5) und/oder dem Lichtsender (4) eine Blende (9a bzw. 9b) im Strahlengang (8) vor- bzw. nachgeschaltet ist.

2. Vorrichtung nach Anspruch 1, dadurch gekennzeichnet, daß die Strahlengänge (8) von Lichtsender (4) und Lichtempfänger (5) jeweils senkrecht zur Bewegungsrichtung des Aufzeichnungsträgers (2) verlaufend gewählt sind.

3. Vorrichtung nach den Ansprüchen 1 und 2, dadurch gekennzeichnet, daß die beiden Reflektoren (7b, 7c) aus einem sogenannten Tripel-Reflektor (14) bestehen.

4. Vorrichtung nach den Ansprüchen 1 bis 3, dadurch gekennzeichnet, daß Lichtsender (4) bzw. Lichtempfänger (5) aus Infrarot-Sender bzw. Infrarot-Empfänger gebildet sind.

Fi g.1

Fi g.2

0058285

Europäisches
Patentamt

**EUROPÄISCHER RECHERCHENBERICHT**

Nummer der Anmeldung

EP 81 73 0120

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| | **EINSCHLÄGIGE DOKUMENTE** | | |
| Y | IBM TECHNICAL DISCLOSURE BULLETIN, Band 22, Nr.4, September 1979 NEW YORK (US) T.H.ANDERSON u.a.: "Transmissive Document Sensor" Seiten 1585-1586 | 1,2,3 | B 65 H 7/14 |
| Y | * Seiten 1585-1586 * | 4 | |
| | -- | | |
| Y | DE - A - 1 817 025 (ECE) | | |
| | * Seite 3, Zeile 15 bis Seite 6, Zeile 2; Figuren * | 1 | RECHERCHIERTE SACHGEBIETE (Int Cl.³) |
| | -- | | |
| X | XEROX DISCLOSURE JOURNAL, Band 5, Nr. 2, März/April 1980 P.R.SPENCER und G.R.SKILLMAN: "Paper Sensor" Seiten 191-192 | | B 65 H G 06 K |
| | * Seiten 191-192 * | 4 | |
| | ---------- | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsatze
E: älteres Patentdokument, das jedoch erst am oder nach dem Anmeldedatum veröffentlicht worden ist
D: in der Anmeldung angefuhrtes Dokument
L: aus andern Grunden angefuhrtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| DEN HAAG | 23-04-1982 | LONCKE |

EPA form 1503.1   06.78